# EUROPEAN PATENT APPLICATION

(11) **EP 1 749 804 A2**
(43) Date of publication of application: **07.02.2007**
(21) Application number: 06015348.3
(22) Date of filing: 24.07.2006
(51) Int. Cl.: C04B 18/10, C04B 5/00

(54) **Use of a matrix obtained by treating the slag of urban solid waste for the production of a mineral additive as a substitute for cement in the preparation of concrete, system for the production of said matrix and relative method**

(30) Priority: 26.07.2005 IT mi20051439
(71) Applicant: Astrid Worldwide LCC, Lewes DE 19958 (US)
(72) Inventor: Rosmarino, Claudio, c/o Astrid Worldwide LCC, Lewes,Delaware 19958 (US)
(74) Representative: Minoja, Fabrizio

(57) **Abstract**

A description is given of a system for the production of a matrix from slag of urban solid waste from an incinerator, to be used as a mineral additive for partially replacing cement in the preparation of concrete, characterised in that the following are provided:
• means suitable for removing metallic materials from the slag in granules, sorting the slag into two flows of material of different grain size, treating separately the two categories of material in granules, with elimination of the unburnt material and the metals, crushing the part of material with the granules larger in size, combining the two categories of material in granules; removing the further metallic parts remaining in said material; finely grinding the granulated material; wetting the finely sorted material for corrosion of the metallic aluminium and dehydrating and/or drying the finely sorted material for use in the production of concrete.

## Description

The present invention relates to the use of a matrix obtained by treating the slag of urban solid waste for the production of a mineral additive as a substitute for cement in the preparation of concrete and a system and the relevant method of production of said matrix from the slag of urban solid waste from a furnace or from an incinerator.

More particularly the system according to the invention allows forced refining of this slag, eliminating the unburnt material and the metal parts, ferrous and otherwise, in order to obtain in output a finely sorted material containing the component parts useful for the planned purpose.

The treatment method for obtaining the matrix according to the invention involves:
- a first elimination of the coarse ferrous material;
- sorting of the waste according to the size of the granules;
- separate treatment of the two categories of granules, with elimination of the ferrous and non-ferrous metals and of the unburnt material, and later crushing of the larger granules;
- the combination of the two granulates after crushing and elimination of foreign bodies in order to obtain granules suitable for being used in the subsequent phases of processing;
- ageing and its stabilisation by carbonation;
- grinding of the product obtained in this way, to be used as a mineral additive for partially replacing the cement in the preparation of concrete;
- treatment in water until the metallic aluminium has completely corroded and the hydrogen has been released;
- dehydration or drying of the matrix in order to use it in the various conditions of supply in the preparation of concrete.

The invention comes within the area of treatment and recycling of waste, more particularly urban solid waste.

Normally waste incinerators produce, in output, slag in the form of ash mixed with ferrous materials and a small percentage of unburnt organic materials.

This ash, once extinguished in water, require disposal and this causes further problems and above all high costs, since this material has to be dumped or landfilled.

In any case costs are incurred that do not produce any benefit.

In recent years various studies have been carried out to find a solution to the problem and allow recycling of this slag.

Since the ash from the combustion of urban solid waste contains a high percentage of materials used in the cement industry, this slag has been used with reasonable results in processes for the production of cement.

With the current state of the art however this system has some limits of applicability in percentage terms, mostly due to the presence of high quantities of foreign bodies present in this ash.

The products used for the production of cement must have a sufficient degree of purity or in any case not contain foreign bodies, which in time cause problems in the furnaces, forcing more frequent operations of maintenance to be carried out that entail a shutdown of the plant for a few days with serious financial damage.

This problem is now remedied by the present invention, which proposes a system and the relevant method for obtaining, via the treatment of slag of urban solid waste, a matrix to be used as a mineral additive to replace cement in the preparation of concrete which has a very high degree of purity such as to allow this use without problems for the plants.

For this purpose the waste, appropriately crushed, is subjected to a successive series of operations that allow the metallic and unburnt materials to be eliminated, thus obtaining at the end of the treatment a matrix whose granules contain the materials necessary for subsequent processing.

The granules can be used, after a process of ageing, grinding and elimination of the hydrogen, as mineral additives for partially replacing cement in the preparation of concrete.

The present invention will now be described in detail by way of a nonlimiting example, with reference to the accompanying drawings in which:

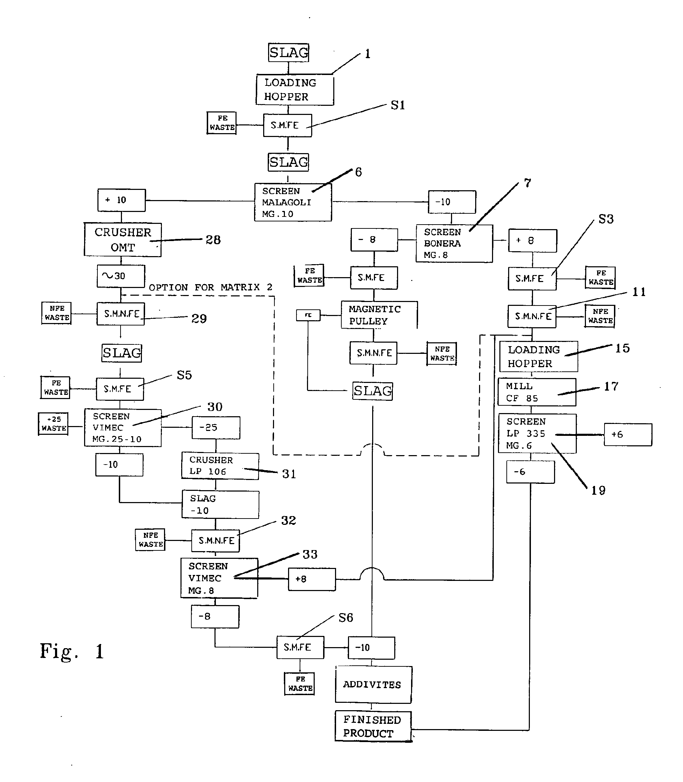

- Figure 1 is a block diagram of a system for the production of the matrix according to the invention;

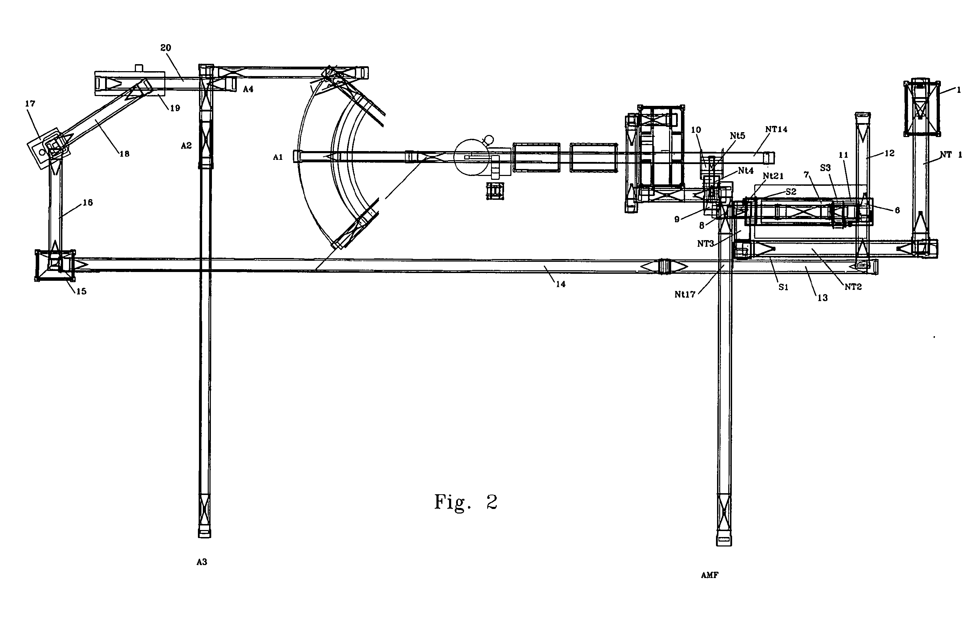

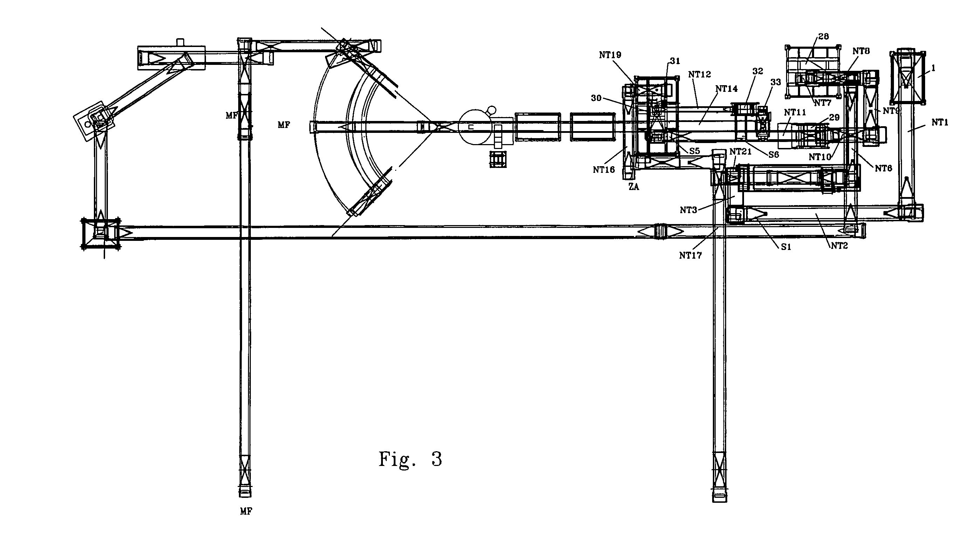

- Figures 2 and 3 are views that show the layout of the system, in which for greater clarity and comprehensibility of the drawings only the lines for treatment of fine materials and of coarse materials respectively are illustrated in a plan view.

The various components of the system will now be illustrated, describing the phases of treatment of the slag.

Referring to the accompanying drawings, the slag from an incinerator is loaded into a hopper 1 which then unloads the material, batching it, onto a pair of belts NT1 and NT2 which take it in succession to a height, as far as a first separator of ferrous materials S1, where these materials are removed by means of a system of electromagnets.

The ferrous metals are unloaded onto a belt NT 17 which takes them into a storage zone, while the slag is unloaded onto an underlying belt NT3 and later the belt NT21 which takes it to a rotating screen 6.

Here the slag is separated into two fractions of different sizes, more particularly fractions with size smaller or larger than 10 mm.

The coarse fraction, with size greater than 10 mm, is unloaded onto elevator belts NT6 and the subsequent NT7 which takes it to a crusher 28 formed more particularly by a fixed hammer mill, where the slag is cut up and then unloaded onto a series of conveyor belts NT8, NT9, NT10 which go to apparatus 29 for the separation of non-ferrous metals (aluminium, bronze, alloys, etc.).

This is apparatus of a known type which, through magnetic induction, creates strong parasite currents that repel the metals present in the slag, causing them to fall onto a belt going to a second storage zone, not illustrated in the drawings.

The material is then unloaded onto an elevator belt NT11 which takes it towards second apparatus S5 with permanent magnets, for the removal of the finer ferrous parts.

From here the materials are unloaded onto a vibrating screen 30 which separates non-ferrous metals such as steel and unburnt materials (it should be noted the crusher from which they come has crushed and therefore reduced into small parts the solid parts, while the metals and the unburnt materials are deformed but not crushed and can therefore be held by the screen).

The non-magnetic materials and the unburnt materials are unloaded onto belts NT 16 and NT 19 which take them to a storage zone ZA; the screened material (aggregate) falls into a crusher 31 which brings it to a size of approximately 8 mm; the fine part, which leaves the crusher 31, falls onto an elevator belt NT12 which takes it towards a further separator of non-ferrous metals 32, again of the magnetic induction type.

At the exit of the separator 32 the granulate falls onto a vibrating screen 33.

The unscreened material goes to the line 8/10, while the fine material (screened material), which exits the screen 6, passes onto a belt NT14 which is situated under the screen and goes to a separator of ferrous metals S6.

Once the metals have been removed, the granulate is sent to the depots of finished material MF.

The fine fraction, with size smaller than 10 mm, is sent to a screen 7 for further sorting, to extract the fraction 8/10 in order to be able to send it for further refinement and cleaning.

The two further fractions are known as "fine fraction" and "fraction 8/10".

The fine fraction is sent to an elevator belt 8 and during the journey the material passes under a permanent magnet separator s2 for removal of fine parts of iron.

The material falls onto a vibrating batcher 9 which spreads the material out homogeneously.

The distributed material is loaded onto a conveyor belt NT4 equipped with a magnetic pulley and the magnetic material falls onto a conveyor belt NT5 and is loaded onto the belt NT 14 which takes it to the storage depots.

The inert fraction supplies a parasite currents device 10 for the separation of non-ferrous metals (aluminium, bronze, alloys, etc.).

This is apparatus of a known type which, through magnetic induction, creates strong parasite currents which repel the metals present in the slag, causing them to fall onto a belt leading to a second storage zone, not illustrated in the drawings. The demetallised material is then unloaded onto the conveyor belt NT14 which takes it to the storage depots A1, A2 and A3.

The fraction 8/10 is sent to a combined demetallisation system composed of a permanent magnet separator of ferrous metals S3 and apparatus 11 for the separation of non-ferrous metals (aluminium, bronze, alloys, etc.).

The resulting inert material is sent to a system of conveyor belts 12, 13 and 14 and a loading hopper 15.

From here it passes onto a belt 16 which goes to a vertical axis mill with principle of automatic crushing 17 for subsequent refinement.

The material leaving the mill is transported by means of an elevator belt 18 to a control vibrating screen 19.

The screened materials go to a storage zone A4 via a belt 20.

The matrix obtained is subjected to a process of ageing through carbonation or, preferably, natural ageing consisting of leaving the matrix exposed to the atmosphere, CO₂, etc. for a few weeks or a few months, and is later ground to sizes of a few microns and left in water in a basic environment for a few days so that the metallic aluminium present in the matrix completely corrodes, releasing hydrogen.

At the end of the reaction a sludge is obtained which is dehydrated and/or dried so as to obtain a matrix which can be used as a mineral additive for partially replacing cement in the preparation of concrete.

Tests were performed, preparing reference samples in concrete with batching of Portland 425 cement batched at 400 kg/m³ and test samples in which the cement was replaced with the matrix according to the invention, ground in a ball mill and then left in water until the metallic aluminium is completely corroded and the hydrogen released.

Table 1 shows the strengths measured after 10 days and after 28 days of ageing, for the sample and for the two test concretes, in which 10% of cement and 20% of cement respectively were replaced with the matrix according to the invention.

**Table 1**

| Matrix | 10 days Density (kg/m³) | 28 days Density (kg/m³) | Compressive Strength 10 days (MPa) | Compressive Strength 28 days (MPa) |
|---|---|---|---|---|
| CONTROL | 2330 | 2337 | 27.9 | 38.2 |
| MIX10 | 2308 | 2360 | 37.4 | 42.6 |
| MIX20 | 2300 | 2342 | 29.8 | 38.5 |

As can be seen from the results shown in the table, the strength of the concrete was found to be no lower than the reference sample in both cases.

The concentration of eluates was then tested and the data are given in Table 2, from which it is seen that the values measured in the case of the matrix according to the invention are similar to those of the sample.

**Table 2**

| **Concentration of eluates (mg/l)** | **Description** | | |
|---|---|---|---|
| | CONTROL | MIX 10 | MIX 20 |
| As | <0.01 | <0.01 | <0.01 |
| Ba | 0.43 | 0.69 | 0.91 |
| Be | <0.001 | <0.001 | <0.001 |
| Cd | 0.0005 | 0.0005 | 0.0005 |
| Co | <0.01 | <0.01 | <0.01 |
| Cr | 0.0494 | 0.0529 | 0.0541 |
| Hg | <0.001 | <0.001 | <0.001 |
| Ni | <0.01 | <0.01 | <0.01 |
| Pb | 0.019 | 0.028 | 0.034 |
| Cu | <0.04 | <0.04 | <0.04 |
| Se | <0.05 | <0.05 | <0.05 |
| V | 0.010 | 0.010 | 0.010 |
| Zn | <0.04 | <0.04 | <0.04 |
| NO₃ | <10 | <10 | <10 |
| CN | <18 | <16 | <16 |
| CI | <15 | <15 | <15 |
| F | <1 | <1 | <1 |
| SO₄ | <10 | <10 | <10 |

The treatment process substantially involves:
- a first elimination of coarse ferrous materials;
- sorting of the slag according to the size of the granules;
- the separate treatment of the two categories of granules, with elimination of all the ferrous and non-ferrous metals and unburnt materials, and subsequent crushing of the larger-sized granules;
- combination of the two granulates after crushing and elimination of foreign bodies;
- ageing of the crushed material;
- grinding until a powder is obtained with grain size similar to that of cement (approximately 20 µm);
- treatment in water in a basic environment until the metallic aluminium is completely corroded and the hydrogen released;
- dehydration and/or drying to obtain a matrix which can be used as a mineral additive for partially replacing cement in the preparation of concrete, in proportions up to approximately 30% in weight.

It should be noted that the single apparatuses that make up the system, for example screens, apparatuses for the removal of metals, etc. are in themselves known and therefore a detailed description is not needed.

With the system and the method according to the invention it is therefore possible to treat slag from the incineration of urban solid waste effectively to obtain a matrix which can be used as a mineral additive for partially replacing the cement in the preparation of concrete, thanks to the high degree of refinement that can be obtained.

A person skilled in the art can provide various modifications and changes, which must however be considered as coming within the sphere of the present invention.

## Claims

1. System for the production of a matrix from slag of urban solid waste from an incinerator, to be used as a mineral additive for partially replacing cement in the preparation of concrete, **characterised in that** the following are provided:
• means suitable for removing metallic materials from the slag in granules;
• means suitable for sorting the slag into two flows of material of different grain size;
• means suitable for treating separately the two categories of material in granules, with elimination of the unburnt material and the metals;
• means suitable for crushing the part of material with granules of larger size;
• means suitable for combining the two categories of materials in granules;
• means suitable for removing the further metallic parts remaining in said material;
• means suitable for finely grinding the granulate material;
• means suitable for wetting the finely sorted material for corrosion of the metallic aluminium;
• means suitable for dehydrating and/or drying the finely sorted material for use in the production of concrete.

2. System according to claim 1, **characterised in that** it provides:
• a separator of ferrous materials suitable for removing said materials from a flow of slag to be crushed;
• a screen suitable for separating the slag into two flows in which the granules have different sizes;
• a crusher suitable for crushing the material of the flow with granules of larger size;
• an induction separator suitable for removing the non-ferrous metals from this material;
• a second separator of ferrous materials;
• a screen suitable for separating unburnt material from this material;
• second induction apparatus for the separation of non-ferrous materials;
• a belt suitable for transporting the flow of fine granules material towards a separator of non-ferrous materials;
• a subsequent separator of ferrous materials;
• means suitable for combining the two flows of materials, now ground to the same size and free from metals and unburnt material;
• a mill suitable for finely grinding the granulate material;
• basins or tanks with stirrers for wetting the ground material;
• systems of dehydration and/or drying suitable for separating the water from the sludge in output from the wetting system for use in the preparation of concrete of the material previously finely sorted.

3. Method for the treatment of slag of urban solid waste for the production of a matrix to be used as a mineral additive for partially replacing cement in the preparation of concrete, wherein the slag is crushed and the metallic parts and unburnt material are eliminated, **characterised in that** it provides, after removal of the coarse ferrous parts, separation of the material into two flows of material with granules of different sizes, the separate treatment of these two flows with subsequent crushing of the part of material with larger granules, removal of the unburnt material and of the metals from both flows of material and their subsequent combination, ageing and stabilisation by means of carbonation, grinding of the product, treatment in water until the metallic aluminium present has corroded and dehydration and/or drying of the matrix in order to use it in the various conditions of supply in the preparation of concrete.

4. Method according to claim 3, **characterised in that** the following phases are provided:
• removal of the coarse ferrous material from the slag of urban solid waste;
• screening of said slag and separation of the same into a flow of material with granules small in size and a second flow of material with granules larger in size;
• treatment of the flow of material with granules smaller in size, with subsequent removal of the non-ferrous metals and of the finer ferrous metals;
• treatment of the flow of material with granules larger in size with crushing of the same;
• separation of the non-ferrous metals;
• removal of the ferrous metals;
• separation by screening of the unburnt material;
• further separation of the non-ferrous metals;
• combination of the different treatment flows;
• ageing of the crushed material;
• grinding to obtain a powder with grain size similar to that of cement;
• treatment in water in a basic environment until the metallic aluminium has completely corroded;
• dehydration and/or drying to obtain a matrix to be used as a partial substitute for cement in the preparation of concrete.

5. Use of a matrix produced by the method according to claims 3-4 as a substitute mineral additive in proportions up to 30% in weight of the cement in the preparation of concrete.

6. System and method for the treatment of slag of urban solid waste for the production of a matrix to be used as a substitute mineral additive in proportions up to 30% in weight of the cement in the preparation of concrete, as described and illustrated.
